Europäisches Patentamt

European Patent Office

Office européen des brevets

(19)

(11) Publication number: 0 517 358 A1

# EUROPEAN PATENT APPLICATION

(12)

(21) Application number: 92303525.7

(22) Date of filing: 21.04.92

(51) Int. Cl.5: G06F 13/40

(30) Priority: 21.05.91 GB 9111000

(43) Date of publication of application:
09.12.92 Bulletin 92/50

(84) Designated Contracting States:
DE FR GB IT NL SE

(71) Applicant: RESEARCH MACHINES PLC
Mill Street
Oxford OX2 0BW(GB)

(72) Inventor: Batty, Sean Nicholas
11 Ralegh Crescent
Witney, Oxon, OX8 5PD(GB)

(74) Representative: Unwin, Stephen Geoffrey et al
S.G. Unwin & Co. 2 North Street
Islip Oxford OX5 2SL(GB)

(54) Bus cycle control means.

(57) Bus cycle control means for a computer having a primary bus for receiving signals from a processing unit (CPU) and a secondary bus (MCA Bus) for accessing other components comprising indicating means for artifically indicating to the processing unit (CPU) that a cycle initiated on the secondary bus (MCA Bus) is complete before it has actually been completed whereby the processing unit (CPU) is able to carry out other functions on the primary bus whilst the cycle on the secondary bus (MCA Bus) is being completed.

FIG.3.

This invention relates to bus cycle control means for a computer having a primary bus for receiving signals from a central processing unit and a secondary bus for accessing other components.

In the field of bus cycle control hardware of personal computer systems, a secondary bus system is frequently employed in addition to the primary bus which is mainly used for access of the main code and data memory.

It is common in the field of personal computer architectures to employ a multiple bus system to provide access to the different areas of the address range that may be accessed by the system central processor unit (CPU). For example, there will be an address and data bus which provides a means of accessing the main data and code memory within the system, in order for the CPU to process the instructions which constitute a program that may be run by the user. This memory is likely to consist primarily of random access memory (RAM). It is likely that some read only memory (ROM) will also be included to allow the CPU to become operational from switching the machine on. A secondary set of address and data buses is included to provide a means of accessing a different area of the CPU address range. This may consist of the memory associated with the graphics, for example, and possibly a special area in the address range, for controlling a variety of functions associated with external devices such as printers etc. This special area is usually referred to as IO.

It is likely that this secondary bus will operate a speed slower than the primary bus for the main memory system. This is the case, since it is required to be independent of the CPU speed, in order that a wide range of independently designed third party adapters can be employed to provide additional features to the computer system, such as networking and these cards must be capable of working in machines with CPUs capable of operating at different speeds.

As a result of this operating speed difference between the primary and secondary buses, the cycles which take place on the secondary bus will execute much more slowly than those on the primary bus and will therefore occupy the CPU for relatively long periods. This means that the CPU cannot be used to access the main memory during this period and so carry out other functions. Although the CPU employed may have the ability to fetch more instructions whilst it is executing the current one, it cannot do so if its bus interface circuitry is employed performing a cycle on the secondary bus. If the secondary bus cycle takes a long time to complete, this can result in the CPU being completely idle for relatively long periods.

A typical example of this would be when the CPU had read a quantity of data from the main memory, processed it and then performed a write cycle to the graphics control hardware which lies on the secondary bus. Although the CPU may be able to continue processing the data it had prefetched before commencing the write cycle to the graphics control hardware, it will not be able to perform any more main memory reads until the secondary bus cycle has been completed.

According to a first aspect of the invention, there is provided bus cycle control means for a computer have a primary bus for receiving signals from a processing unit and a secondary bus for accessing other components comprising indicating means for artifically indicating to the processing unit that a cycle initiated on the secondary bus is complete before it has actually been completed whereby the processing unit is able to carry out other functions on the primary bus whilst the cycle on the secondary bus is being completed.

According to a second aspect of the invention, there is provided a method of enabling a processing unit of a computer having primary and secondary buses to carry out other functions on the primary bus before a cycle on the secondary bus has been completed, comprising the step of issuing an artificial indication to the processing unit that the cycle on the secondary bus has been completed before it has actually done so.

Preferred features of the invention will be apparent from the following description and the subsidiary claims of the specification.

The invention will now be further described, merely by way of example, with reference to the accompanying drawings, in which:

Figures 1A and 1B illustrate bus cycle timings of primary and secondary buses with and without implementation of the present invention;

Figures 2A, 2B and 2C illustrate bus cycle timings of primary and secondary buses with and without implementation of the present invention and illustrating a potential problem which can arise and how this can be dealt with;

Figure 3 is a block diagram of one form of bus cycle control means according to the invention; and

Figure 4 is a timing diagram illustrating a typical sequence of events when the invention is implemented.

The bus cycle control means to be described enables a secondary bus write cycle to be artificially indicated as complete to the CPU before its actual completion, thereby allowing the CPU to continue performing cycles on the primary bus in parallel with the outstanding cycle on the secondary bus. The outstanding cycle would then be completed on the secondary transparently to the CPU. This mechanism will be referred to as "posting" the write cycle.

In order to extend the benefits achieved in this way, the system is preferably arranged such that at least one further write cycle to the secondary bus can be initiated and indicated to the CPU as being complete, even before the actual completion of the first write cycle. Hence, it is possible to execute multiple level posted write cycles.

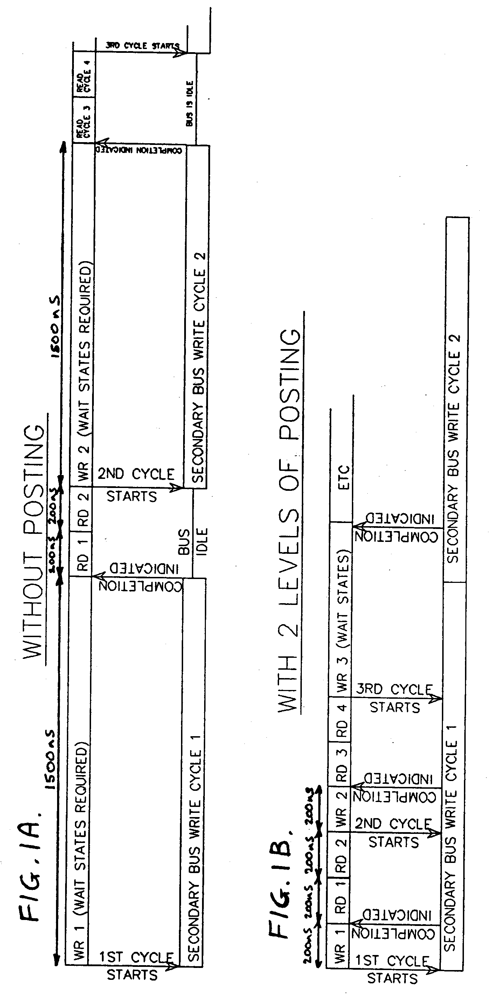

In the case of the example given above: if the CPU is an 80286 device running at 10Mhz, then a normal cycle on the primary bus (without wait states) will take 200nS. In comparison, a typical write cycle being performed to the graphics control hardware via the secondary bus may take up to 1500nS. Hence, as can be seen from Fig 1, the time taken to complete two write cycles to the graphics control hardware would be 3400nS and the CPU is unable to carry out other functions during this period. However, if multiple level posting is employed as described above, the time can be reduced to just 80CnS as shown. Such an example is of course dependent on the nature of the code being executed and represents the largest possible saving available with two levels of posting.

It is common in the architectures of personal computers for the secondary bus to include control mechanisms which permit a cycle to be extended by the device being accessed if it is unable to meet the minimum timing requirements of the secondary bus. This will have the effect of apparently making the operation of the secondary bus very much slower still, so lending to even greater time savings if posted write cycles are used as described above.

As a result of the wide range of third party adapters that can be attached to the secondary bus, it is sometimes necessary to cause a delay to be introduced between successive accesses to the same adapter. One of the ways in which this can be achieved, is to include a small delay loop in the CPU code between the instructions that cause the access to the adapter. The method of posting write cycles described above would have the effect of hiding this delay since it may be executed after the first posted write to the device. A second posted write cycle could then be issued to the same device and would be executed immediately after the first. In view of this, it is desirable for the bus cycle control means to allow a variable delay to be inserted between posted cycles.

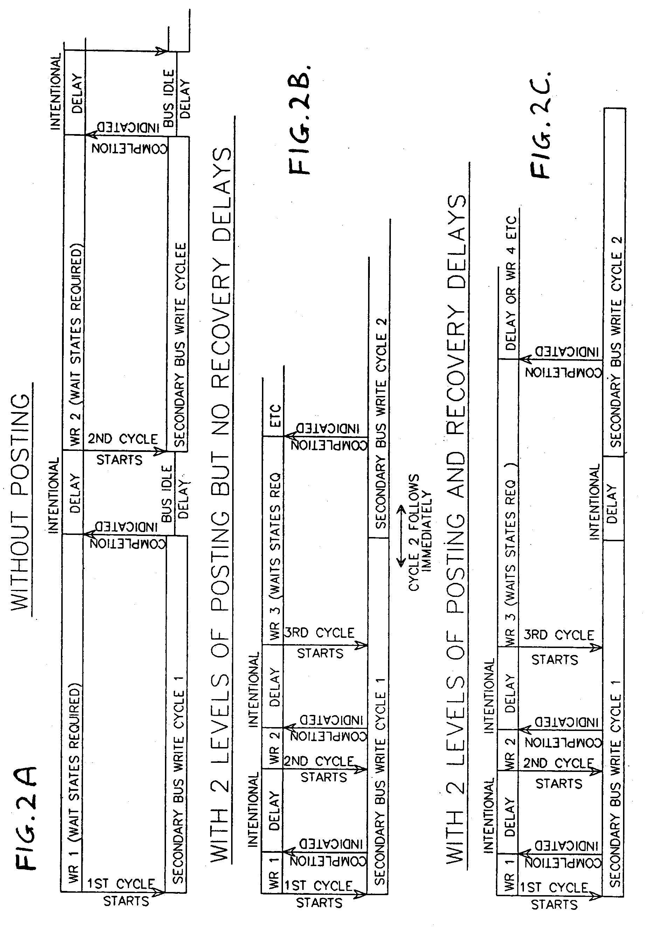

This is illustrated by Figure 2. Figure 2A corresponds to Figure 1A and illustrates the conventional timing of cycles on the primary and secondary buses. Figure 2B corresponds to Figure 1B but shows the situation where two successive accesses are made to the secondary bus so that the second cycle immediately follows the first. Figure 2C illustrates how this can be avoided by inserting an intentional delay between the completion of the first write cycle on the secondary bus and the start of the second write cycle.

In addition, in extreme cases, it may be desirable to inhibit the posting of cycles completely in order to maintain compatibility with third party adapters. Consequently, a configuration mechanism is preferably provided to allow the user to select whether or not posting is to be enabled and even to control which addresses are to have posted cycles performed to them.

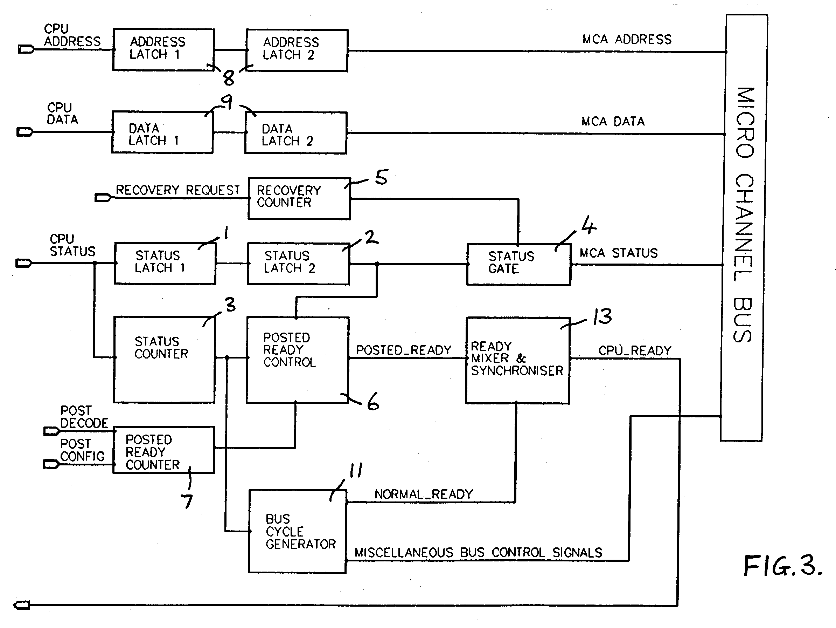

In the preferred embodiment illustrated in Figure 3, a system employing an Intel 80286 CPU operating at 10MHz is described. This description is concerned only with the implementation of the bus control circuitry for a personal computer system employing a secondary bus in the form of a Micro Channel bus and architecture. The remainder of the system will not be described but will be well understood by those skilled in the art. Figure 3 is a high level diagram showing the main constituent blocks of the bus control circuitry.

Status latches 1 an 2 are provided for latching the status (ie instructions) produced by the CPU. Two levels of latch are provided. The primary function of the latches 1 and 2 is to hold the value of the status for the period required to meet the timing specification of the bus. The second function of the latches 1 and 2 is to act as a pipeline for storing the status information issued from the CPU. The availability of the latches 1 and 2 thus plays an important role in determining when a cycle can be indicated to the primary bus as being complete. This is particularly true in the case of status latches since the CPU will only maintain its status for fixed period of time, irrespective of whether wait states are being inserted in the write cycles on the primary bus. This means that if the artificial indication that the cycle on the MCA Bus is complete is to be issued to the CPU, then the first level of status latch 1 must be free for use.

A status counter 3 is provided to count the number of write cycles that have been issued by the CPU. The status counter 3 is incremented when new status is issued from the CPU and decremented when the corresponding cycle has begun on the MCA Bus. This permits a bus controller (not shown) and a posted ready controller 6 (described below) to monitor the fact that there may still be cycles to be performed after they have completed processing the current cycle on the MCA Bus.

A count of the complete number of valid status conditions issued from the CPU is thus maintained and whenever this count value exceeds zero, the circuitry is primed to issue the corresponding cycle onto the MCA Bus. It is this action of issuing the status to the MCA Bus which causes a cycle to be initiated.

The posted ready controller 6 is provided to facilitate the issuing of artificial cycle indication flags to the system CPU to artificially indicate that the write cycle is complete. These flags will be referred to as a signal "READYS". This is consistent within the context of the preferred embodiment since Intel 80286 device senses that a cycle is complete when a signal READY is asserted on its external pin.

A status gate 4 is provided to permit recovery delays to be inserted on the MCA bus between successive cycles. This is achieved by inhibiting the processed CPU status from appearing on the MCA bus. Since the appearance of status on the MCA bus indicates the start of a cycle, then by inhibiting the status, no cycle will begin. A recovery counter 5 is provided to count intervals of the MCA bus operating period from the end of the preceding cycle before allowing status to be presented on the bus.

The status gate 4 is thus responsible for inhibiting the status from appearing on the MCA bus in order to prevent a cycle from commencing. This is necessary in order to achieve an intentional delay as shown in Figure 2C since, as mentioned above, if the status is withheld then a cycle will not commence. These intentional delays are referred to as recovery delays.

The delay counter 5 is programmable, in order that the duration of the recovery period may be varied. The duration to be used is programmed in a configuration register (not shown) provided elsewhere in the system.

A posted ready counter 7 is provided to maintain a record of the number of cycles which have been indicated as being complete before their actual completion, ie the number of posted cycles. In addition to being an important factor in determining whether to "post" another cycle, this also serves to prevent there being a further indication of the actual cycle completion by the bus controller itself, as would be the case during non-posted cycles.

A count of the number of posted cycles issued is thus maintained. This is generated from a two-bit counter in the preferred embodiment, so allowing for 0, 1 or 2 posted cycles to represented. This could be expanded as required if more levels of posting were implemented.

A bus cycle generator 11 is provided to actually generate the bus control signals required to execute a cycle on the MCA bus. In conjunction with this, control means (not shown) is also provided to implement bus conversion cycles. These are required when the system CPU accesses an adapter with a different size data word to that of itself. Such cycles will be well known to those skilled in the art so will not be described further.

Address and data latches 8 and 9 are provided to enable the data and address signals issued by the system CPU to be latched before being presented to the MCA bus. This allows the information issued by the CPU to be stored before it is ready for use, i.e. while an earlier posted cycle is in progress on the MCA bus. These latches are also employed during bus conversion cycles as mentioned above. Control means (not shown) are also provided to control the passing of data and address signals through the latches 8 and 9.

A synchroniser/mixer 13 is provided to process the various sources of the READY signal and produce the required timing characteristics for the CPU. This allows the timing characteristics of the ordinary READY and the posted READY signals to be less rigourously defined, thereby providing for more simple generation of these signals.

The synchroniser/mixer 13 is thus provided for controlling the artificial READY indication sent back to the CPU. Since the bus cycle generator 11 will have a tendency to produce a READY signal by default at the end of the cycle anyway, this must be inhibited in the case of a posted cycle in order to avoid passing a READY signal back to the CPU twice (or more) for one cycle.

The permission to post a write cycle is the result of an address decode from elsewhere in the system and the configuration outputs indicating that posting is to be performed for the status being issued. It is possible to achieve this in the preferred embodiment described since the Intel 80286 achieves a sufficient degree of address pipelining to permit the address to be decoded in time for use in conjunction with the new status.

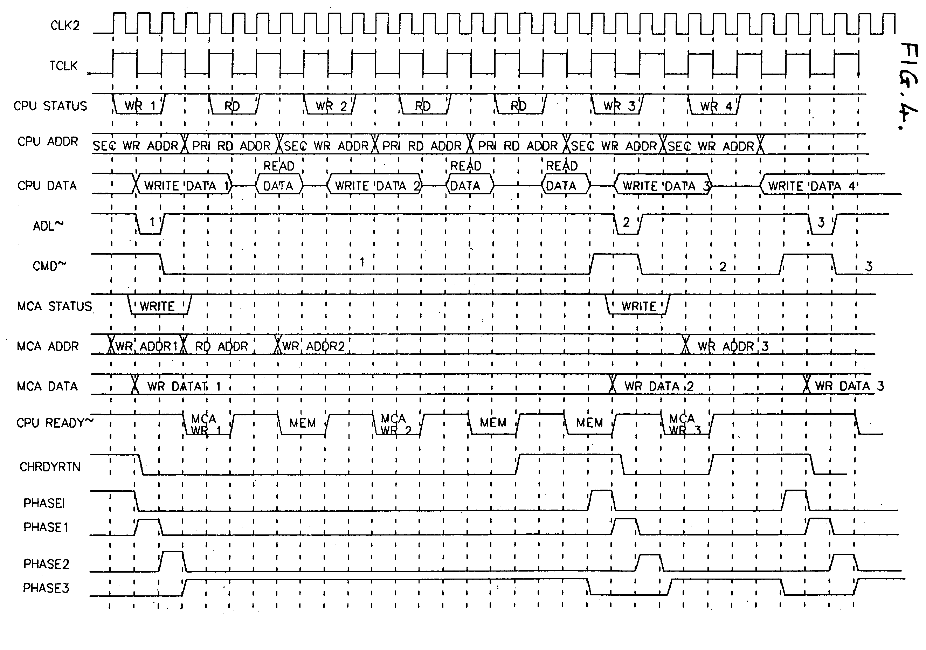

Figure 4 shows a section of a timing diagram which depicts a typical sequence of events within the preferred embodiment described above. A reader skilled in the art will appreciate the signal relationships shown and it is anticipated that the reader will be able to extend this timing information to include a wider range of cycle combinations.

It will also be understood that:
* Although the preferred embodiment described above uses a particular combination of CPU and bus type, the system can be modified to provide the enhancements to performance described for a wide range of currently available CPU devices and bus standards.
* By use of an additional external means, it would be possible to request recovery delays to be applied in the absence of CPU generated delays in order to maintain compatibility. Such an indication could consist of an address decode means and then as a factor in to the internal request for recovery delays.
* By extending the number of bits employed in the various counters described above, and by extending the level of status, address and data latches used, the reader will understand that the number of posted cycles which may be issued can be increased. However, it will be appreciated that the extent to which the benefit of the increased levels can be realised will be dependant on the nature of the code executed by the system CPU.

The performance of a computer system may thus be improved by the use of an accelerated secondary bus write cycle termination method as described above. The bus cycle control means described provides a mechanism whereby a cycle which is being performed to a secondary bus in a personal computer system, can be indicated to the system CPU as being complete before its actual completion in order to permit the CPU to continue accessing the primary bus in parallel. Furthermore, it provides a means by which this artificial completion may be indicated more than once to allow cycles to be initiated to the secondary bus and be "stacked up" whilst the CPU continues in parallel. A programmable bus delay feature may also be employed to permit compatibility to be maintained with third party adapters. Furthermore, means may be provided for selecting which addresses are to have posted cycles applied to them.

**Claims**

1. Bus cycle control means for a computer have a primary bus for receiving signals from a processing unit (CPU) and a secondary bus (MCA BUS) for accessing other components comprising indicating means for artifically indicating to the processing unit (CPU) that a cycle initiated on the secondary bus (MCA BUS) is complete before it has actually been completed whereby the processing unit (CPU) is able to carry out other functions on the primary bus (MCA BUS) whilst the cycle on the secondary bus is being completed.

2. Bus cycle control means as claimed in claim 1, which comprises status latches (1, 2) for latching status signals issued by the processing unit (CPU) for use when the cycle can be initiated on the secondary bus (MCA BUS).

3. Bus cycle control means as claimed in claim 1 or 2 which comprises address and data latches (8, 9) for latching address and data signals issued by the processing unit (CPU) for use when the relevant cycle can be initiated on the secondary bus (MCA BUS).

4. Bus cycle control means as claimed in any of claims 1, 2 or 3 which comprises a status counter (3) which is incremented when a status signal is issued by the processing unit (CPU) and decremented when a cycle is begun on the secondary bus (MCA BUS).

5. Bus cycle control means as claimed in any preceding claim in which the indicating means is able to artificially indicate that a second cycle on the secondary bus (MCA BUS) is complete even before a first cycle on the secondary bus (MCA BUS) has actually been completed.

6. Bus cycle control means as claimed in claim 5 which comprises a second counter (7) arranged to maintain a record of the number of cycles which have been artificially indicated as complete before their actual completion.

7. Bus cycle control means as claimed in any preceding claim which comprises delay means (4) for inserting a delay between the end of a cycle on the secondary bus and the beginning of the following cycle on that bus.

8. Bus cycle control means as claimed in any preceding claim in which the delay means is programmable so as to permit the length of the delay inserted to be varied.

9. Bus cycle control means as claimed in any preceding claim which is programmable so as to select the address range or ranges for which the said indicating means is operative.

## FIG. IA.  WITHOUT POSTING

| ←————— 1500 nS ——————→ | ←200 nS→ ←200 nS→ | ←——————— 1500 nS ——————→ | |
|---|---|---|---|

WR 1 (WAIT STATES REQUIRED) | RD 1 | RD 2 | WR 2 (WAIT STATES REQUIRED) | READ CYCLE 3 | READ CYCLE 4

1ST CYCLE STARTS — COMPLETION INDICATED — 2ND CYCLE STARTS — COMPLETION INDICATED — 3RD CYCLE STARTS

SECONDARY BUS WRITE CYCLE 1 | BUS IDLE | SECONDARY BUS WRITE CYCLE 2 | BUS IS IDLE

## FIG. IB.  WITH 2 LEVELS OF POSTING

←200nS→ ←200nS→ ←200nS→ ←200nS→

WR 1 | RD 1 | RD 2 | WR 2 | RD 3 | RD 4 | WR 3 (WAIT STATES) | ETC

1ST CYCLE STARTS — COMPLETION INDICATED — 2ND CYCLE STARTS — COMPLETION INDICATED — 3RD CYCLE STARTS — COMPLETION INDICATED

SECONDARY BUS WRITE CYCLE 1 | SECONDARY BUS WRITE CYCLE 2

# FIG.2A WITHOUT POSTING

FIG.2A — WITHOUT POSTING

| WR 1 (WAIT STATES REQUIRED) | INTENTIONAL DELAY | WR 2 (WAIT STATES REQUIRED) | INTENTIONAL DELAY |

1ST CYCLE STARTS — COMPLETION INDICATED — 2ND CYCLE STARTS — COMPLETION INDICATED

| SECONDARY BUS WRITE CYCLE 1 | BUS IDLE DELAY | SECONDARY BUS WRITE CYCLEE | BUS IDLE DELAY |

## WITH 2 LEVELS OF POSTING BUT NO RECOVERY DELAYS

FIG.2B.

| WR 1 | INTENTIONAL DELAY | WR 2 | INTENTIONAL DELAY | WR 3 (WAITS STATES REQ | ETC |

1ST CYCLE STARTS — COMPLETION INDICATED — 2ND CYCLE STARTS — COMPLETION INDICATED — 3RD CYCLE STARTS — COMPLETION INDICATED

| SECONDARY BUS WRITE CYCLE 1 | SECONDARY BUS WRITE CYCLE 2 |

CYCLE 2 FOLLOWS IMMEDIATELY

## WITH 2 LEVELS OF POSTING AND RECOVERY DELAYS

FIG.2C.

| WR 1 | INTENTIONAL DELAY | WR 2 | INTENTIONAL DELAY | WR 3 (WAITS STATES REQ ) | DELAY OR WR 4 ETC |

1ST CYCLE STARTS — COMPLETION INDICATED — 2ND CYCLE STARTS — COMPLETION INDICATED — 3RD CYCLE STARTS — COMPLETION INDICATED

| SECONDARY BUS WRITE CYCLE 1 | INTENTIONAL DELAY | SECONDARY BUS WRITE CYCLE 2 |

EP 0 517 358 A1

FIG.3.

EP 0 517 358 A1

FIG. 4.

EP 0 517 358 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 384 621 (DATA GENERAL CORPORATION) * column 2, line 6 - column 3, line 8 * | 1 | G06F13/40 |
| A | US-A-4 868 741 (GULA ET AL.) * abstract * * column 1, line 34 - line 68 * * claims 1-4 * | 1 | |
| A | WO-A-8 902 127 (DIGITAL EQUIPMENT CORPORATION) * abstract * * page 3, line 34 - page 5, line 14 * | 1 | |
| | | | TECHNICAL FIELDS SEARCHED (Int. Cl.5) |
| | | | G06F |

The present search report has been drawn up for all claims

| Place of search | Date of completion of the search | Examiner |
|---|---|---|
| THE HAGUE | 22 SEPTEMBER 1992 | MCDONAGH F.M. |

EPO FORM 1503 03.82 (P0401)